Europäisches Patentamt

European Patent Office

Office européen des brevets

(11) Numéro de publication : **0 329 556 B1**

# (12) FASCICULE DE BREVET EUROPEEN

(45) Date de publication du fascicule du brevet :
**19.11.92 Bulletin 92/47**

(51) Int. Cl.$^5$ : **A01N 59/00**

(21) Numéro de dépôt : **89400437.3**

(22) Date de dépôt : **17.02.89**

(54) Compositions désinfectantes contenant du peroxyde d'hydrogène.

(30) Priorité : **19.02.88 FR 8801985**

(43) Date de publication de la demande :
**23.08.89 Bulletin 89/34**

(45) Mention de la délivrance du brevet :
**19.11.92 Bulletin 92/47**

(84) Etats contractants désignés :
**AT BE CH DE ES FR GB GR IT LI LU NL SE**

(56) Documents cités :
**FR-A- 640 647**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Jourdan-Laforte, Eric**
**67, rue La Fontaine**
**F-75016 Paris (FR)**
Inventeur : **Carron, Henry**
**50, avenue Jean Jaurès**
**F-93500 Pantin (FR)**
Inventeur : **Nicolle, Rémy**
**12, rue Martin Bernard**
**F-75013 Paris (FR)**

(74) Mandataire : **Vesin, Jacques et al**
**L'AIR LIQUIDE, SOCIETE ANONYME POUR L'ETUDE ET L'EXPLOITATION DES PROCEDES GEORGES CLAUDE 75, quai d'Orsay**
**F-75321 Paris Cédex 07 (FR)**

EP 0 329 556 B1

## Description

Le peroxyde d'hydrogène est connu depuis plus d'un siècle pour son pouvoir oxydant, qui en fait un agent de blanchiment, un désinfectant et un antiseptique. Le peroxyde d'hydrogène trouve son emploi en milieu industriel, par exemple dans le blanchiment de textiles, de pâtes à papier, et en milieu médical dans la désinfection et l'antiseptie. Le peroxyde d'hydrogène est notamment utilisé avec succès en blanchiment des textiles, cependant le cas des blanchisseries hospitalières est particulier, car, il convient de nettoyer le linge par un détergent approprié, le blanchir par un agent de blanchiment, le désinfecter ou le stériliser.

Le formaldéhyde et certains générateurs de formol étudiés depuis une cinquantaine d'années pour leur propriétés germicides sont bien connus de la pharmacopée et également utilisés en industrie mécanique, dans le traitement des fluides de coupes, en cosmétologie etc... pour leur pouvoir bactériostatique ou fongistatique qui en font de bons conservateurs de milieux périssables.

Il a été recherché des associations de composés ayant une action désinfectante exaltée par rapport à celle de leurs constituants.

On sait par Römpp : Chemie Lexicon, page 1726 (1962) que le traitement à chaud ou par le peroxyde de barium, du trioxyméthylène, du tetraoxyméthylène ou du paraformaldéhyde, permet de reformer du formaldéhyde.

D'autre part, le brevet français n° 640.647 décrit un procédé de préparation d'un produit antiseptique consistant à faire réagir une solution de formaldéhyde à 30% environ sur une solution de peroxyde d'hydrogène à 32% environ, puis à rajouter du phénol et une huile éthérée.

Des essais réalisés avec une solution de formaldéhyde n'ont cependant mis en évidence aucune synergie en présence de peroxyde d'hydrogène.

Le brevet français n° 640.647 indique également que l'on peut substituer le formaldéhyde par du paraformaldéhyde. Des essais ont montré qu'à pH neutre, là encore, aucun effet de synergie n'était obtenu.

Par contre, il a été constaté de manière inattendue, que l'association d'un générateur de formaldéhyde et de peroxyde d'hydrogène en milieu alcalin se révèle beaucoup plus désinfectante que le générateur de formaldéhyde ou le peroxyde d'hydrogène pris séparément. L'existence d'une synergie entre le peroxyde d'hydrogène et les produits générant le formaldéhyde a été ainsi découverte.

La présente invention concerne donc des compositions désinfectantes caractérisées par l'association d'un générateur de formaldéhyde et de peroxyde d'hydrogène en un milieu alcalin.

Par générateur de formaldéhyde on désigne les composés susceptibles de former in-situ au moins une molécule de formaldéhyde libre ou masquée. Par molécule de formaldéhyde masquée, on entend toute espèce chimique en équilibre chimique avec le formaldéhyde, comme des hydrates, hémiacétals et cétals, ainsi que ses polymères.

Parmi ces générateurs de formaldéhyde, on peut citer les oligomères du formaldéhyde, notamment ceux représentés par la formule générale $HO-(CH_2O)_n-H$, les dérivés éthers ou esters d'acides organiques ou minéraux correspondants, de formule $RO-(CH_2O)_n-R'$ et les oligomères cycliques de formule générale $(OCH_2)_n$.

Dans cette première famille de générateurs de formaldéhyde de formule $HO-(CH_2O)_n-H$, les composés dans la formule desquels n est compris entre 1 et 8 peuvent présenter un intérêt, par exemple du méthylène glycol à l'octaoxyméthylène glycol, de même le paraformaldéhyde dans lequel n est compris entre 8 et 100.

Et, avec le composé dans la formule duquel n est égal à 3 ou supérieur, le polyoxyméthylène (POM), on a mis en évidence une synergie germicide avec le peroxyde d'hydrogène particulièrement intéressante.

Pour les dérivés éthers, dans la formule $RO-(CH_2O)_n-R'$, R et R' peuvent être identiques ou différents, et représentent des chaînes carbonées en $C_{1-20}$, linéaires, ramifiées ou cycliques, saturées ou insaturées, n étant compris entre 1 et 100. Les éthers préférés sont les éthers d'alkyle en $C_{1-4}$, de cyclohéxyle ou de phényle, et en particulier le méthylal, pour lequel n = 1 et R = R' = $CH_3$. Pour les dérivés esters, dans la formule $RO-(CH_2O)_n-R'$, R et R' identiques ou différents peuvent également représenter le radical $COR_1$ où $R_1$ est une chaîne carbonée en $C_{1-20}$ linéaire, ramifiée ou cyclique, saturée ou insaturée. Les esters préférés sont ceux où $R_1$ représente un radical alkyle en $C_{1-4}$, ou un noyau aromatique, et en particulier le diacétate de polyoxyméthylène, où n>1 et R = R' = $COCH_3$. Et pour les esters d'acides minéraux, on peut aussi citer à titre de composé générateur préféré les borates omega-méthyl-polyoxyméthylène de formule $R_1-CO-O-(CH_2O)_{n\,3}B$ où n>1 et $R_1$ défini comme précédemment.

Et parmi les oligomères cycliques de formule $(OCH_2)_n$, on peut faire mention du trioxanne et du tétroxanne.

On peut aussi citer les oligomères du formaldéhyde de formule $HO-CH_2-(CHOH)_p-CHO$ où p=0,1,2,3 ou 4 obtenus par auto-condensation, par exemple, quand n = 0 l'aldéhyde glycolique, quand n = 1 l'aldéhyde glycérique ainsi que son tautomère "dihydroxyacétone", quand n = 2 l'érythrose et quand n = 3 l'arabinose, ainsi que leurs dérivés de formule $RO-CH(CHOH)_p-CHO$, R étant défini comme précédemment.

On peut citer aussi les produits obtenus par condensation de formaldéhyde avec les composés possédant un groupe dit "méthylène-activé", de formule générale $HO-CH_2-CR_2R_3Y$, où Y représente un groupe "électro-attracteur" tel que $NO_2$, et $R_2$ et $R_3$ sont définis ci-après.

Tous ces composés, à titre d'exemple, constituent des générateurs de formol dont les mélanges avec le peroxyde d'hydrogène se sont révélés beaucoup plus désinfectants que le peroxyde d'hydrogène ou le composé générateur employés séparément.

Et, avec le tris-hydroxyméthylnitrométhane (TN) en association avec le peroxyde d'hydrogène, on a constaté une synergie de l'activité désinfectante particulièrement significative, de même avec le nitro-2 méthyl-2 propanediol-1,3 (NMPD).

Dans cette famille, à titre d'exemple, on peut citer les composés suivants :

| Y | $R_2$ | $R_3$ | |
|---|---|---|---|
| $NO_2$ | H | H | nitro-2-éthanol |
| $NO_2$ | $CH_2OH$ | H | nitro-2 propanediol-1,3 |
| $NO_2$ | $CH_2OH$ | $CH_2OH$ | tris-hydroxyméthylnitrométhane |
| $NO_2$ | $NO_2$ | $CH_2OH$ | dinitro-2, 2 propanediol-1,3 |
| $NO_2$ | $NO_2$ | $NO_2$ | trinitro-2,2,2 éthanol |
| $NO_2$ | $CH_2OH$ | $CH_3$ | nitro-2 méthyl-2 propanediol-1,3 |
| $NO_2$ | $CH_2OH$ | $C_2H_5$ | éthyl-2 nitro-2 propanediol |
| $NO_2$ | $CH_3$ | $CH_3$ | diméthyl-2,2 nitroéthanol |
| CN | CN | H | méthylol malonitrile |
| CN | Ar | H | aryl-2 glyconitrile |
| CN | COOR | H | hydroxyméthyl-2 cyanacétate |
| CHO | $CH_2OH$ | $CH_2OH$ | pentaérythrose |

Ainsi que les composés où Y est un groupement carbonyle, alkyloxycarbonyle, aryloxycarbonyle, aminocarbonyle, sulfone, sulfinate, sulfonate, amidosulfonate, ammonium, phosphonium, arsonium, antimonium, etc... et de façon générale tout électroattracteur. De façon générale, $R_2$ et $R_3$, identiques ou différents peuvent représenter une chaîne carbonée du type R tel que défini précédemment, un atome d'hydrogène ou Y.

La synergie apparaît en milieu alcalin, entre pH8 et pH12, et plus particulièrement entre pH9 et pH11.

L'action désinfectante du peroxyde d'hydrogène est fortement renforcée par l'association avec un des générateur de formol précédemment cités, notamment pour des rapports en poids des deux constituants de 10/1 à 1/10, de préférence 5/1 à 1/5, et en particulier de 2/1 à 1/2.

L'effet synergique bactéricide a été apprécié à partir de l'abaissement d'une population bactérienne. Pour mettre en évidence cette synergie on s'est placé volontairement à des concentrations telles que le peroxyde d'hydrogène seul abaisse la population bactérienne d'environ 5%, le tris-hydroxyméthylnitrométhane permet une réduction de 60% et le polyoxyméthylène de 90%. Et, il a été observé qu'un mélange peroxyde d'hydrogène - générateur de formaldéhyde permet un abaissement de 99 % de la population bactérienne. A l'issue d'un tel traitement, on peut considérer que la population résiduelle est environ 50 fois plus faible qu'à l'issue d'un traitement par le peroxyde d'hydrogène,le tris-hydroxymethylnitrométhane ou l'$\alpha$-polyoxyméthylène seuls.

Les compositions désinfectantes selon l'invention trouvent leurs applications dans la désinfection terminale en milieu hospitalier, la désinfection par trempage des instruments et matériels médicaux, dentaires, vétérinaires, thermo-sensibles, la désinfection du linge ménager et hospitalier et la désinfection par pulvérisation des milieux contaminés.

Il est donné ci-après des exemples qui illustrent l'invention à titre non limitatif.

lors d'essais préliminaires à température ambiante, la souche Streptococcus faecalis CNCM 5855 a été retenue comme traceur le plus représentatif de l'effet bactéricide. Les souches sont préparées et testées selon les protocoles de la norme AFNOR NFT 72150 aux modifications suivantes près : à l'issue du temps de contact, généralement compris entre 0 et 60 minutes, voire quatre heures dans certains cas, le dénombrement de la population bactérienne survivante est fait par dosage de l'adénosine triphosphate (ATP) bactérien en bioluminescence. Toute bactérie vivante renferme de l'adénosine triphosphate qui intervient dans la réaction enzymatique productrice de lumière entre la luciférine et la luciférase. La quantité de lumière étant proportionnelle

3

à la quantité d'ATP présente pour des doses de luciférine et luciférase constantes, elle est proportionnelle au nombre de bactéries survivantes dans l'essai. L'appareil utilisé est un matériel commercialisé sous la marque "Lumac/3M Biocounter M2010A"

Les chutes de germes bactériens sont indiquées en logarithme décimal log 10 correspondant au rapport du nombre de germes initiaux aux nombres de germes finaux après désinfection au bout du temps de contact.

Des essais comparatifs ont été réalisés dans les conditions précédemment décrites avec du peroxyde d'hydrogène seul, du tris-hydroxyméthylnitrométhane, commercialisé sous la marque "TN 100", et avec l'association des deux composés. Ces essais sur l'association ont été conduits à l'ambiante, dans ce cas aucune température n'est précisée, ou à 40°C. Les essais ont été réalisés à différents pH et temps de contact en minutes, l'effet bactéricide est indiqué en chutes de germes en log 10, et les résultats consignés dans les tableaux; les chiffres indiqués correspondent aux chutes de germes en log 10 du rapport germes initiaux/germes finaux après désinfection.

Les résultats apparaissent dans les tableaux suivants. Ces solutions contiennent les composés désinfectants (H$_2$O$_2$, "TN100", PDM ou NMPD) dans les quantités indiquées en grammes pour 100 millilitres d'eau (O correspond à l'eau pure sans désinfectant).

Exemple 1

Les essais sont réalisés à pH7

| TEMPS (mn) | 0 | 10 | 30 | 60 | 120 | 180 | 240 |
|---|---|---|---|---|---|---|---|
| O | 0 | 0 | 0 | 0 | 0 | 0 | 0 |
| H$_2$O$_2$ 0,25 | 0 | 0,02 | 0,25 | 0,25 | 0,24 | 0,23 | 0,26 |
| TN100 0,25 | 0 | 0,01 | 0,04 | 0,03 | 0,04 | 0,05 | 0,04 |
| H$_2$O$_2$ 0,25 + TN 100 0,25 | 0 | 0,01 | 0,03 | 0,05 | 0,03 | 0,06 | 0,05 |
| H$_2$O$_2$ 0,25 + TN 100 0,25 (40°) | 0 | 0,01 | 0,04 | 0,02 | 0,05 | 0,05 | 0,05 |

Exemple 2 :

Dans cet exemple, les essais sont réalisés à pH9, comme précédemment avec H$_2$O$_2$ et du "TN100" seuls ou en association ; les chutes de germes sont consignées dans le tableau II suivant :

| pH = 9 | | | | | | | |
|---|---|---|---|---|---|---|---|
| TEMPS (mn) | 0 | 10 | 20 | 30 | 40 | 50 | 60 |
| O | 0 | 0 | 0 | 0 | 0 | 0 | 0 |
| H$_2$O$_2$ 0,25 | 0 | 0,05 | 0,26 | 0,22 | 0,25 | 0,25 | 0,27 |
| TN 100 0,25 | 0 | 0,14 | 0,27 | 0,34 | 0,43 | 0,37 | 0,35 |
| H$_2$O$_2$ 0,25 + TN 100 0,25 | 0 | 1,12 | 1,45 | 1,83 | 1,78 | 1,85 | 1,91 |
| H$_2$O$_2$ 0,25 + TN 100 0,25 (40°) | 0 | 1,09 | 1,33 | 1,68 | 1,87 | 1,93 | 1,90 |

La synergie apparaît pour un pH alcalin.

Exemple 3 :

Dans cet exemple, les essais sont réalisés à pH10 avec $H_2O_2$ et du "TN 100" seuls ou en association, les résultats obtenus pour les chutes de germes sont consignés dans le tableau III ci-après :

| pH = 10 | | | | | | | |
|---|---|---|---|---|---|---|---|
| TEMPS (mn) | 0 | 10 | 20 | 30 | 40 | 50 | 60 |
| 0 | 0 | 0 | 0 | 0 | 0 | 0 | 0 |
| $H_2O_2$ 0,25 | 0 | 0,03 | 0,025 | 0,026 | 0,21 | 0,26 | 0,25 |
| TN 100 0,6 | 0 | 0,23 | 0,54 | 0,60 | 0,32 | 0,62 | 0,37 |
| $H_2O_2$ 0,25 + TN 100 0,6 | 0 | 2,15 | 2,08 | 2,19 | 2,30 | 2,15 | 2,11 |
| $H_2O_2$ 0,25 + TN 100 0,6 (40°) | 0 | 1,49 | 2,19 | 2,13 | 2,28 | 2,44 | 2,36 |

La synergie apparaît pour un pH alcalin. Le peroxyde d'hydrogène seul permet d'abaisser une population bactérienne d'environ 5% et l'association $H_2O_2$/"TN 100" en pH alcalin permet un abaissement de 99%. A l'issue d'un tel traitement, la population résiduelle est plus de 50 fois plus faible qu'à l'issue d'un traitement $H_2O_2$ ou "TN 100" seul.

Exemple 4 :

Le même type d'essais a été conduit avec un mélange $H_2O_2$-polyoxyméthylène (POM) dans lequel principalement n est compris entre 3 et 10.

Les résultats obtenus sont consignés dans le tableau IV, les essais ayant été conduits à pH7. Comme précédemment les concentrations sont exprimées en grammes pour 100 millilitres.

| pH = 7 | | | | | | | |
|---|---|---|---|---|---|---|---|
| TEMPS (mn) | 0 | 10 | 30 | 60 | 140 | 180 | 240 |
| 0 | 0 | 0 | 0 | 0 | 0 | 0 | 0 |
| $H_2O_2$ 0,25 | 0 | 0,02 | 0,25 | 0,25 | 0,24 | 0,23 | 0,26 |
| POM 0,25 | 0 | 0,07 | 0,05 | 0,05 | 0,07 | 0,06 | 0,07 |
| $H_2O_2$ + POM 0,25 0,25 | 0 | 0,04 | 0,03 | 0,07 | 0,07 | 0,06 | 0,06 |
| $H_2O_2$ + POM (40°C) 0,25 0,25 | 0 | 0,05 | 0,05 | 0,06 | 0,05 | 0,04 | 0,07 |

Exemple 5 :

Dans cet exemple les essais avec $H_2O_2$, le polyoxyméthylène (POM) et l'association $H_2O_2$ + POM ont été mis en oeuvre à pH9.

Les résultats obtenus sont rassemblés dans le tableau V.

| pH = 9 | | | | | | | |
|---|---|---|---|---|---|---|---|
| TEMPS (mn) | 0 | 10 | 20 | 30 | 40 | 50 | 60 |
| 0 | 0 | 0 | 0 | 0 | 0 | 0 | 0 |
| $H_2O_2$ 0,25 | 0 | 0,05 | 0,26 | 0,22 | 0,25 | 0,25 | 0,27 |
| POM 0,25 | 0 | 0,21 | 0,58 | 0,81 | 0,75 | 0,79 | 0,81 |
| $H_2O_2$ + POM 0,25 0,25 | 0 | 1,98 | 2,03 | 2,01 | 2,05 | 2,04 | 2,05 |
| $H_2O_2$ + POM (40°C) 0,25 0,25 | 0 | 2,02 | 2,05 | 2,11 | 2,07 | 2,11 | 2,12 |

La synergie apparaît à pH alcalin.

Exemple 6 :

Dans cet exemple, les essais ont été conduits dans les mêmes conditions que précédemment, mais à pH 10. Les résultats sont réunis dans le tableau VI.

| pH = 10 | | | | | | | |
|---|---|---|---|---|---|---|---|
| TEMPS (mn) | 0 | 10 | 20 | 30 | 40 | 50 | 60 |
| 0 | 0 | 0 | 0 | 0 | 0 | 0 | 0 |
| $H_2O_2$ 0,25 | 0 | 0,03 | 0,25 | 0,26 | 0,21 | 0,26 | 0,25 |
| POM 0,25 | 0 | 0,31 | 0,67 | 0,78 | 0,82 | 0,82 | 0,80 |
| $H_2O_2$ 0,25 + POM 0,25 | 0 | 2,01 | 1,94 | 2,05 | 2,02 | 1,99 | 2,07 |
| $H_2O_2$ 0,25 + POM 0,25 (40°C) | 0 | 2,05 | 2,01 | 2,09 | 2,12 | 2,09 | 2,17 |

La synergie est très significative à pH alcalin. $H_2O_2$ permet d'abaisser une population bactérienne d'environ 5% en 20 mn, par contre le mélange $H_2O_2$ + POM permet un abaissement de 99% dès 10 mn, à l'issue d'un tel traitement la population résiduelle est environ 50 fois plus faible qu'à l'issue d'un traitement $H_2O_2$ ou POM seul.

Exemple 7 :

Dans cet exemple, les spores de Bacillus cereus CNCM 7803 ont été retenues comme traceur représentatif de l'effet germicide. Les spores de Bacillus cereus sont préparées et testées selon les protocoles de la norme AFNOR de la série 72000.

Des spores de Bacillus cereus CNCM 7803 sont mises en contact 12 minutes à 60°C avec le produit à tester en présence de lessive (4g/l). Après neutralisation du désinfectant, la suspension est dénombrée sur gélose en boite de Petri. La concentration initiale en spores est de $10^6$ spores par ml (unités revivifiables).

Les essais sont conduits à pH12, les résultats comparatifs entre le tris-hydroxyméthylnitrométhane "TN 100" à diverses concentrations (première ligne) et l'association "TN 100" à ces mêmes concentrations + peroxyde d'hydrogène (0,7 g/l) sont résumés dans le tableau VII suivant. Les chiffres indiquent la population de spores ayant survécue au traitement.

6

| Concent. en "TN100" (g/l) | 0 | 0,01 | 0,1 | 0,25 | 0,5 | 0,75 | 1 |
|---|---|---|---|---|---|---|---|
| TN 100 seul | 250 000 (1) | 247 000 | 77000 | 76000 | 22000 | 2100 | 240 |
| TN 100 + H$_2$O$_2$ 0,7g/l | 37000 (2) | 20000 | 18000 | 5000 | 110 | 26 | 1 |

(1) Témoin lessive : le lavage alcalin à 60°C fait chûter la population initiale d'environ 10 fois.

(2) Témoin lessive + H$_2$O$_2$. L'adjonction de 0,7 g/l H$_2$O$_2$ fait chûter la population initiale d'environ 100 fois.

Une synergie apparaît pour une adjonction de "TN 100" dès 0,25 g/l au peroxyde d'hydrogène, faisant chûter la population initiale d'environ 1000 fois contre 100 fois pour H$_2$O$_2$ seul et 50 fois pour le "TN 100" seul.

Exemple 8 :

Les essais comparatifs de cet exemple ont été conduits dans les mêmes conditions que précédemment sur des spores de Bacillus cereus CNCM 7803, à pH 12, entre le nitro-2 méthyl-2 propanediol-1,3 (NMPD) à diverses concentrations et l'association NMPD + H$_2$O$_2$ 0,7 g/l. Les résultats relatifs à la population de spores ayant survécue au traitement sont rassemblés dans le tableau ci-après.

| Concent. en NMPD en g/l | 0 | 0,01 | 0,25 | 0,5 | 0,75 | 1 |
|---|---|---|---|---|---|---|
| NMPD seul | 243 000 (1) | 222 000 | 66000 | 28000 | 2700 | 220 |
| NMPD + H$_2$O$_2$ 0,7g/l | 35000 (2) | 33000 | 2500 | 200 | 24 | 4 |

(1) et (2) concernent les mêmes remarques que dans l'exemple précédent.

On constate que pour le nitro-2 méthyl-2 propadeniol-1,3 une synergie apparaît nettement dès la concentration de 0,25 g/l, faisant chuter la population initiale d'environ 1000 fois contre 100 fois pour H$_2$O$_2$ seul et 50 fois pour le NMPD seul.

**Revendications**

1. Compositions désinfectantes caractérisés par l'association d'un générateur de formaldéhyde et de peroxyde d'hydrogène en milieu alcalin.

2. Compositions désinfectantes selon la revendication 1, caractérisées en ce que le générateur de formaldéhyde est un composé susceptible de former in-situ au moins une molécule de formaldéhyde libre ou masquée.

3. Compositions désinfectantes selon la revendication 1, caractérisées en ce que le générateur de formaldéhyde est un oligomère du formaldéhyde choisi parmi les composés représentés par la formule HO-$(CH_2O)_n$-H, les dérivés éthers, esters d'acides organiques ou minéraux de formule RO-$(CH_2O)_n$-R', dans laquelle R et R', identiques ou différents, représentent des chaînes carbonées en $C_{1-20}$, linéaires, ramifiées ou cycliques, saturées ou insaturées, ou le radical $COR_1$ où $R_1$ est une chaîne carbonée en $C_{1-20}$, linéaire, ramifiée ou cyclique, saturée ou insaturée, et les oligomères cycliques de formule $(OCH_2)_n$, n étant compris entre 1 et 100.

4. Compositions désinfectantes selon la revendication 3, caractérisées en ce que n est compris entre 1 et 8, et/ou R et R' représentent les radicaux alkyle en $C_{1-4}$, cyclohéxyle ou phényle, et $R_1$ un radical alkyle en $C_{1-4}$ ou un noyau aromatique.

5. Compositions désinfectantes selon l'une des revendications 1 à 3, caractérisées en ce que le générateur de formaldéhyde est le méthylène glycol ou un polyoxyméthylène glycol (n<8), un paraformaldéhyde, un polyoxyméthylène ou le méthylal, le diacétate de polyoxyméthylène, un borate d'oméga-méthylpolyoxyméthylène, le trioxanne ou le tétroxanne.

6. Compositions désinfectantes selon l'une des revendications 1 ou 2, caractérisées en que le générateur de formaldéhyde est un oligomère de formaldéhyde choisi parmi les composés de formule $HO-CH_2-(CHOH)_P-CHO$ ou $R-OCH_2(CHOH)_P-HO$ où R est une chaîne carbonée en $C_{1-20}$ linéaire, ramifiée ou cyclique, saturée ou insaturée et p est compris entre 0 et 4.

7. Compositions désinfectantes selon l'une des revendications 1,2 ou 6, caractérisées en ce que le composé générateur de formaldéhyde est l'aldéhyde glycolique, l'aldéhyde glycérique, le dihydroxyacétone, l'érythrose, l'arabinose, ou $R-OCH_2 (CHOH)_P-CHO$ où R est un radical alkyle en $C_{1-4}$, cyclohexyle ou phényle.

8. Compositions désinfectantes selon la revendication 1 ou 2, caractérisées en ce que le générateur de formaldéhyde est un composé de formule $HO-CH_2-CR_2R_3Y$ dans laquelle $R_2$, $R_3$ et Y sont des groupes électro-attracteurs, notamment $R_2$ et $R_3$ identiques ou différents représentent H ou une chaîne carbonée en $C_{1-20}$, linéaire, ramifié ou cyclique, saturée ou insaturée, et Y un groupe $NO_2$.

9. Compositions désinfectantes selon la revendication 1 ou 2, caractérisées en ce que le générateur de formaldéhyde est un composé de formule $HO-CH_2-CR_2R_3Y$ dans laquelle $R_2$ et $R_3$ représentent l'hydrogène, le radical méthyle, éthyle, hydroxyméthyle, aryle, carboxylate, $NO_2$ ou CN, et Y représente un groupe électro-attracteur, notamment $NO_2$.

10. Compositions désinfectantes selon la revendication 1,2,8 ou 9, caractérisées en ce que le générateur de formaldéhyde est le tris-hydroxyméthylnitrométhane.

11. Compositions désinfectantes selon la revendication 1,2,8 ou 9, caractérisées en ce que le générateur de formaldéhyde est le nitro-2 méthyl-2 propanediol-1,3.

12. Compositions désinfectantes selon une quelconque des revendications 1 à 11, caractérisées en ce que le rapport en poids des deux constituants de l'association est compris en 10/1 et 1/10, de préférence 5/1 à 1/5.

13. Compositions désinfectantes selon l'une des revendications 1 à 12, caractérisée en ce que le pH dudit milieu alcalin est compris entre 8 et 12, de préférence entre 9 et 11.

14. Application des compositions désinfectantes selon une quelconque des revendications 1 à 13, à la désinfection terminale en milieu hospitalier, à la désinfection par trempage des instruments et matériels médicaux, dentaires, vétérinaires, thermo-sensibles et à la désinfection par pulvérisation de tout milieu contaminé, du linge ménager et hospitalier, à la désinfection par pulvérisation de tout milieu contaminé.

**Patentansprüche**

1. Desinfektionsmittel, **gekennzeichnet durch** die Vereinigung eines Formaldehyd- und Wasserstoffperoxiderzeugers in einem alkalischen Milieu.

2. Desinfektionsmittel nach Anspruch 1, **dadurch gekennzeichnet,** daß der Formaldehyderzeuger eine für die Bildung wenigstens eines freien oder maskierten Formaldehydmoleküls in situ empfängliche Verbindung ist.

3. Desinfektionsmittel nach Anspruch 1, **dadurch gekennzeichnet,** daß der Formaldehyderzeuger ein Formaldehydoligomeres ist, das unter den Verbindungen der Formel $HO-(CH_2O)_n-H$, den Ether-, Esterderivaten organischer Säuren oder Mineralsäuren der Formel $RO-(CH_2O)_n-R'$, worin R und R' gleich oder verschieden sind und geradkettige, verzweigtkettige oder zyklische, gesättigte oder ungesättigte kohlenstoffhaltige $C_{1-20}$-Ketten oder den Rest $COR_1$ bedeuten, worin $R_1$ eine geradkettige, verzweigtkettige oder zyklische, gesättigte oder ungesättigte kohlenstoffhaltige $C_{1-20}$-Kette bedeutet, und den zyklischen Oligomeren der Formel $(OCH_2)_n$, worin n zwischen 1 und 100 liegt, ausgewählt ist.

4. Desinfektionsmittel nach Anspruch 3, **dadurch gekennzeichnet,** daß n zwischen 1 und 8 liegt und/oder R und R' die $C_{1-4}$-Alkyl-, Cyclohexyl- oder Phenylreste bedeuten und $R_1$ ein $C_{1-4}$-Alkylrest oder ein aromatischer Kern ist.

5. Desinfektionsmittel nach einem der Ansprüche 1 bis 3, **dadurch gekennzeichnet,** daß der Formaldehyderzeuger Methylenglykol oder ein Polyoxymethylenglykol (n < 8), ein Paraformaldehyd, ein Polyoxymethylen oder das Methylal, das Polyoxymethylendiacetat, ein omega-Methylpolyoxymethylenborat, das Trioxan oder das Tetroxan ist.

6. Desinfektionsmittel nach einem der Ansprüche 1 oder 2, **dadurch gekennzeichnet,** daß der Formaldehyderzeuger ein Formaldehydoligomer ist, das unter den Verbindungen der Formel $HO-CH_2-(CHOH)_p-CHO$ oder $R-OCH_2(CHOH)_p-HO$ ausgewählt ist, worin R eine geradkettige, verzweigtkettige oder zyklische, gesättigte oder ungesättigte kohlenstoffhaltige $C_{1-20}$-Kette ist und p zwischen 0 und 4 liegt.

7. Desinfektionsmittel nach einem der Ansprüche 1, oder 6, **dadurch gekennzeichnet,** daß die Formaldehyderzeugerverbindung Glykolaldehyd, Glycerinaldehyd, Dihydroxyaceton, Erythrose, Arabinose oder $R-OCH_2-(CHOH)_p-CHO$ ist, worin R ein $C_{1-4}$-Alkyl-, Cyclohexyl- oder Phenylrest ist.

8. Desinfektionsmittel nach einem der Ansprüche 1 oder 2, **dadurch gekennzeichnet,** daß der Formaldehyderzeuger eine Verbindung der Formel $HO-CH_2-CR_2R_3Y$ ist, worin $R_2$, $R_3$ und Y Elektronen anziehende Gruppen sind und insbesondere $R_2$ und $R_3$ gleich oder verschieden sind und H oder eine geradkettige, verzweigtkettige oder zyklische, gesättigte oder ungesättigte kohlenstoffhaltige $C_{1-20}$-Kette bedeuten und Y eine Gruppe $NO_2$ ist.

9. Desinfektionsmittel nach Anspruch 1 oder 2, **dadurch gekennzeichnet,** daß der Formaldehyderzeuger eine Verbindung der Formel $HO-CH_2-CR_2R_3Y$ ist, in welcher $R_2$ und $R_3$ Wasserstoff, den Methyl-, Ethyl-, Hydroxymethyl-, Aryl- oder Carboxylatrest, $NO_2$ oder CN bedeuten und Y eine Elektronen anziehende Gruppe, insbesondere $NO_2$, bedeutet.

10. Desinfektionsmittel nach Anspruch 1, 2, 8 oder 9, **dadurch gekennzeichnet,** daß der Formaldehyderzeuger tris-Hydroxymethylnitromethan ist.

11. Desinfektionsmittel nach Anspruch 1, 2, 8 oder 9, **dadurch gekennzeichnet,** daß der Formaldehyderzeuger Nitro-2-methyl-2-propandiol-1,3 ist.

12. Desinfektionsmittel nach einem der Ansprüche 1 bis 11, **dadurch gekennzeichnet,** daß das Gewichtsverhältnis der beiden Bestandteile der Vereinigung zwischen 10/1 und 1 /10, vorzugsweise zwischen 5/1 und 1 /5 liegt.

13. Desinfektionsmittel nach einem der Ansprüche 1 bis 12, **dadurch gekennzeichnet,** daß der pH-Wert des alkalischen Milieus zwischen 8 und 12, vorzugsweise zwischen 9 und 11 liegt.

14. Verwendung der Desinfektionsmittel nach einem der Ansprüche 1 bis 13 zur abschließenden Desinfektion im Krankenhausmilieu, zur Desinfektion medizinischer, zahnmedizinischer, veterinärmedizinischer hitzeempfindlicher Instrumente und Materialien durch Eintauchen und zur Desinfektion von Haushalts- und Krankenhauswäsche und zur Desinfektion des gesamten verunreinigten Milieus durch Bestäuben.

**Claims**

1. Disinfectant compositions, characterised by the association of a producer of formaldehyde and of hydrogen peroxide in an alkaline medium.

2. Disinfectant compositions according to claim 1, characterised in that the producer of formaldehyde is a compound which is capable of forming in-situ at least one free or masked formaldehyde molecule.

3. Disinfectant compositions according to claim 1, characterised in that the producer of formaldehyde is an oligomer of the formaldehyde chosen from among the compounds represented by formula $HO-(CH_2O)_n-H$, the derivatives ethers, esters of organic or mineral acids of formula $RO-(CH_2O)n-R'$, in which R and R', identical or different, represent chains which are carbonated in $C_{1-20}$, linear, branched or cyclic, saturated or unsaturated, or the radical $COR_1$ or $R_1$ is a chain which is carbonated in $C_{1-20}$, linear, branched or cyclic, saturated or unsaturated, and the cyclic oligomers of formula $(OCH_2)_n$, n being contained between 1 and 100.

4. Disinfectant compositions according to claim 3, characterised in that n is contained between 1 and 8 and/or R and R' represent the radicals alkyl in $C_{1-4}$, cyclohexyl or phenyl, and $R_1$ a radical alkyl in $C_{1-4}$ or an aromatic nucleus.

5. Disinfectant compositions according to one of the claims 1 to 3, characterised in that the producer of formaldehyde is methylene glycol or polyoxymethylene glycol (n<8), a paraformaldehyde, a polyoxymethylene or methylal, polyoxymethylene diacetate, an omega-methyl polyoxymethylene borate, trioxane or tetroxane.

6. Disinfectant compositions according to one of the claims 1 or 2, characterised in that the producer of formaldehyde is a formaldehyde oligomer chosen from among the compounds of formula $HO-CH_2-(CHOH)_p-CHO$ or $R-OCH_2(CHOH)_p-HO$ where R is a chain which is carbonated in $C_{1-20}$, linear, branched or cyclic, saturated or unsaturated and p is contained between 0 and 4.

7. Disinfectant compositions according to one of the claims 1, 2 or 6, characterised in that the formaldehyde-producing compound is glycolic aldehyde, glyceric aldehyde, dihydroxyacetone, erythrose, arabinose, or $R-OCH_2(CHOH)_p-CHO$ where R is a radical alkyl in $C_{1-4}$, cyclohexyl or phenyl.

8. Disinfectant compositions according to one of the claims 1 or 2, characterised in that the producer of formaldehyde is a compound of formula $HO-CH_2-CR_2R_3Y$ in which $R_2$, $R_3$ and Y are electrophilic groups, in particular $R_2$ and $R_3$ identical or different represent H or a chain which is carbonated in $C_{1-20}$, linear, branched or cyclic, saturated or unsaturated, and Y a group $NO_2$.

9. Disinfectant compositions according to claim 1 or 2, characterised in that the producer of formaldehyde is a compound of formula $HO-CH_2-CR_2R_3Y$ in which $R_2$ and $R_3$ represent hydrogen, the radical methyl, ethyl, hydroxymethyl, aryl, carboxylate, $NO_2$ or CN, and Y represents an electrophilic group, in particular $NO_2$.

10. Disinfectant compositions according to claim 1, 2, 8 or 9, characterised in that the producer of formaldehyde is tris-hydroxymethyl nitromethane.

11. Disinfectant compositions according to claim 1, 2, 8 or 9, characterised in that the producer of formaldehyde is nitro-2-methyl-2 propanediol-1,3.

12. Disinfectant compositions according to any one of the claims 1 to 11, characterised in that the weight ratio of the two constituents of the association is between 10/1 and 1/10, preferably 5/1 and 1/5.

13. Disinfectant compositions according to one of the claims 1 to 12, characterised in that the pH of said alkaline medium is between 8 and 12, preferably between 9 and 11.

14. Application of the disinfectant compositions according to any one of the claims 1 to 13, for terminal disinfection in a hospital environment, for disinfection by soaking of medical, dental, veterinary, thermo-sensitive instruments and materials and for disinfection by spraying of any contaminated environment, of household and hospital linen, for disinfection by spraying of any contaminated environment.